(19) Europäisches Patentamt
European Patent Office
Office européen des brevets

(11) **EP 3 795 542 B1**

(12) **EUROPÄISCHE PATENTSCHRIFT**

(45) Veröffentlichungstag und Bekanntmachung des Hinweises auf die Patenterteilung:
**12.04.2023   Patentblatt 2023/15**

(21) Anmeldenummer: **20180207.1**

(22) Anmeldetag: **16.06.2020**

(51) Internationale Patentklassifikation (IPC):
*C02F 1/70* (2006.01)        *C02F 1/62* (2006.01)
*C02F 1/66* (2006.01)        *C02F 1/28* (2006.01)
C02F 101/22 (2006.01)        C02F 103/06 (2006.01)
C02F 103/16 (2006.01)        C02F 103/24 (2006.01)

(52) Gemeinsame Patentklassifikation (CPC):
**C02F 1/70; C02F 1/283; C02F 1/62; C02F 1/66;**
C02F 2101/22; C02F 2103/06; C02F 2103/16;
C02F 2103/24

(54) **ENTFERNUNG VON CHROMVERBINDUNGEN AUS CR(VI)-HALTIGEN WÄSSRIGEN PHASEN**

REMOVAL OF CHROMIUM COMPOUNDS FROM CR(VI)-CONTAINING AQUEOUS PHASES

ÉLIMINATION DE COMPOSÉS DE CHROME DES PHASES AQUEUSES CONTENANT DU CR(VI)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.03.2021   Patentblatt 2021/12**

(73) Patentinhaber: **LANXESS Deutschland GmbH 50569 Köln (DE)**

(72) Erfinder: **BOLL, Matthias 51061 Köln (DE)**

(56) Entgegenhaltungen:
CN-A- 108 773 965        CN-A- 108 928 953
CN-B- 109 626 484

• FAHIM N F ET AL: "Removal of chromium(III) from tannery wastewater using activated carbon from sugar industrial waste", JOURNAL OF HAZARDOUS MATERIALS, ELSEVIER, AMSTERDAM, NL, vol. 136, no. 2, 21 August 2006 (2006-08-21), pages 303-309, XP027884625, ISSN: 0304-3894 [retrieved on 2006-08-21]
• LEYVA-RAMOS R ET AL: "ADSORPTION OF TRIVALENT CHROMIUM FROM AQUEOUS SOLUTIONS ONTO CTIVATED CARBON", JOURNAL OF CHEMICAL TECHNOLOGY AND BIOTECHNOLOGY, WILEY, HOBOKEN, USA, vol. 62, no. 1, 1 January 1995 (1995-01-01), pages 64-67, XP000486478, ISSN: 0268-2575

Bemerkungen:
Die Akte enthält technische Angaben, die nach dem Eingang der Anmeldung eingereicht wurden und die nicht in dieser Patentschrift enthalten sind.

**Beschreibung**

**Technisches Gebiet der Erfindung**

Die vorliegende Erfindung betrifft die Aufbereitung von schwermetallhaltigen wässrigen Phasen und insbesondere die Entfernung von Chromionen der Oxidationsstufe VI (Cr(VI)) alleine bzw. zusammen mit ggf. vorhandenen Chromionen der Oxidationsstufe III (Cr(III)) aus wässrigen Phasen.

**Stand der Technik**

Für die Entfernung von Chromverbindungen aus Ab-, Sicker- und Grundwassern - dazu zählen neben den Sickerwässern aus Halden von Ferrochromherstellern auch Deponien von verbrauchtem Chromerz, das zur Herstellung von Chrom(VI)-Chemikalien eingesetzt wurde wurden zahlreiche Verfahren zur Aufreinigung vorgeschlagen. Die Chromkonzentrationen in diesen Wässern sind in der Regel gering und liegen im Bereich von einigen ppm bis einstellige Prozent. Bei höher konzentrierten Lösungen stoßen viele der im Folgenden kurz umrissenen Verfahren an ihre wirtschaftlichen und technologischen Grenzen.

Für geringere Cr(VI) Konzentrationen im Bereich von etwa 100 ppm werden zahlreiche Verfahren vorgeschlagen, so zum Beispiel die Behandlung des Cr(VI)-belastetem Abwassers mit Stahlwolle (A. Özer, H. S. Altundogan, M. Erdem, F. Tümen, Environmental Pollution, Vol. 97, No. 1-2, pp. 107-112, 1997). Allerdings führt die dort vorgeschlagene Behandlung nur zu einer Reduktion des Cr(VI) zu gelöstem Cr(III), erfüllt also nur zu einem Teil die gestellte Aufgabe. Auch Magnesiummetall wird, trotz zu erwartender hoher Kosten für das Metall für die Reduktion der wasserlöslichen Cr(VI) Verbindungen vorgeschlagen (G. Lee, J. Park, Geochimica et Cosmochimica Acta 102 (2013) 162-174).

Die Verwendung des Minerals Pyrit ($FeS_2$) wird für den Einsatz zur Abwasserbehandlung untersucht. Dieses Verfahren führt in einem ersten Schritt zu Cr(III), das in einem weiteren Schritt abgetrennt werden muss (Yao-Tung Lina, Ching-Pao Huangb Separation and Purification Technology 63 (2008) 191-199.), allerdings sind hier die gefundenen Effekte in Bezug auf die eingesetzte Menge Pyrit nicht sehr groß.

Ferner werden organische Abfallprodukte zur Verwendung für die Cr(VI) Reduktion und teilweise Adsorption vorgeschlagen, so zum Beispiel Reisstroh oder auch Traubenreste, Letzteres wird in Rumi Chand, Kenji Narimura, Hidetaka Kawakita, Keisuke Ohto, Takanori Watari, Katsutoshi Inoue Journal of Hazardous Materials 163 (2009) 245-250 beschrieben. In der Literatur werden auch Verfahren diskutiert, die auf einer Reduktion des Cr(VI) mit an Elektroden elektrochemisch erzeugten Fe(II)-Ionen beruhen. Diese Verfahren haben den Vorteil, direkt das entstandene Cr(III) als Hydroxid auszufällen (N. Kongsricharoern and C. Polprasert Wat.Sci. Tech. Vol. 31, No.9, 109-117, 1995). Dieses Verfahren lässt sich laut der Autoren auch bei Chrom-Konzentrationen von fast 4000 ppm anwenden.

Einen Überblick über die verschiedenen Verfahren gibt unter anderem folgende Literatur: Kirubanandam Grace Pavithra, V. Jaikumar*, P. Senthil Kumar, P. Sundar Rajan, Journal of Cleaner Production 228 (2019) 580-593, ebenso in V. Madhavi, A. Vijay Bhaskar Reddy, K. G. Reddy, G, Madhavi and T. Naga Venkata Krishna Vara Prasad Research Journal of Recent Sciences Vol. 2(1), January (2013), 71-83. Auf einige der dort behandelten Verfahren wird im Folgenden näher eingegangen.

Ein industriell häufig angewandtes Verfahren zur Reduktion des in der Lösung vorhandenen Chrom(VI) ist die Zugabe eines löslichen Eisen-(II)-salzes, wie zum Beispiel Eisen-(II)-sulfat. Die Reaktion läuft schnell und zuverlässig in einem breiten pH Bereich ab. Nach Ende der Reaktion wird überschüssiges $Fe^{2+}$ mit Luft zu $Fe^{3+}$ oxidiert. Anschließend wird der pH-Wert erhöht. Chrom und Eisen fallen als voluminöse Hydroxide aus und können mit Hilfe von Fällungs- und Filtrierhilfsmitteln abgetrennt werden. Das Verfahren kann über einen weiten Konzentrationsbereich von Cr(VI) und Cr(III) eingesetzt werden. Allerdings muss $Fe^{2+}$ in einem deutlichen Überschuss verwendet werden, was sowohl die Kosten der Edukte, die technische Umsetzung (höhere Volumen in der Filtration, Eisenrückstände in der Anlage) wie auch die Entsorgungskosten negativ beeinflusst. Des Weiteren ist das stöchiometrische Verhältnis Eisen zu Chrom ungünstig, da für ein Mol Chrom mindestens drei Mol Eisen eingesetzt werden müssen, wodurch die Chromhydroxide durch große Mengen Eisenhydroxide verdünnt wird. Daneben gibt es weitere technische Probleme, wie etwa die Klarfiltration des Abwassers und das voluminöse Filterprodukt. Der erhaltene Schlamm wird in der Regel kostenintensiv auf Mülldeponien entsorgt.

Ein weiteres, industriell angewandtes Verfahren ist die Reduktion von Chrom(VI) durch $SO_2$ oder durch Sulfite wie Natriummetabisulfit im Sauren, in der Regel bei pH 2, mit nachfolgenden Verarbeitungsschritten. Die Reduktion läuft bei niedrigen pH-Werten ab, ist seit langem bekannt und lässt sich leicht durch Verfolgung des Redoxpotentials beobachten (Application Data Sheet ADS 3300-02/rev.B May 2008, Rosemount Analytical Inc., 2400 Barranca Parkway, Irvine, CA 92606 USA). Eine derart produzierte Cr(III)-salzlösung kann einen Einsatz in der Gerberei finden. Allerdings ist die Aufarbeitung der erhaltenen Cr(III)-Lösung, sei es durch Abtrennung des trockenen Salzes oder durch Konzentration der Lösung auf höhere Chromgehalte, jeweils durch Verdampfen von Wasser problematisch: Das oft praktizierte Komplettverdampfen lohnt sich nur bei sehr hohen Konzentrationen, wie sie in den oben aufgeführten Wassertypen nicht zu erwarten sind, und ist daher unwirtschaftlich. Eine Konzentration der Lösungen ist denkbar, ist aber ebenfalls mit hohen Kosten verbunden. Die ebenfalls denkbare und auch praktizierte Fällung des Cr(III) nach der Reduktion, und zwar mit Hilfe von Natronlauge oder bevorzugt Calciumhydroxid und Filterhilfsmitteln oder Flockungsmitteln als Chrom-Hydroxid (im Gemisch mit Gips oder Natriumsulfat) ist möglich und wird auch industriell durchgeführt, es handelt sich aber um eine anspruchsvolle Filteraufgabe mit vorangehender Sedimentation und anschließender Wäsche, verbunden mit einem hohen apparativen Aufwand und entsprechenden Investitionen und großen Abfallströmen.

Eine weitere Möglichkeit ist, die nach Reduktion des Cr(VI) zu Cr(III) erhaltene Lösung durch einen selektiven Kationenaustauscher zu reinigen, wie zum Beispiel in F. Gode, E. Pehlivan Journal of Hazardous Materials B100 (2003) 231-243 oder in S. Kocaoba and G. Akcin Adsorption Science & Technology Vol. 22 No. 5 2004 oder in S. Rengaraj, Kyeong-Ho Yeon, Seung-Hyeon Moon, Journal of Hazardous Materials B87 (2001) 273-287, beschrieben. Das inhärente Problem an diesem Verfahren ist, dass es nur für sehr niedrige Cr(VI) Konzentrationen im zu behandelnden Wasser wirtschaftlich ist, da die Anzahl an Adsorptionsplätzen auf dem Ionentauscher verhältnismäßig gering ist. Dadurch wird nur eine stark verdünnte Lösung nach der Regeneration des Ionenaustauschers erhalten. Zu erwarten sind Lösungen im niedrigen einstelligen Prozentbereich bezogen auf Chrom, wodurch sich wiederum das Verhältnis des gereinigten Volumens zum zu entsorgenden Volumens verschlechtert. Eine wirtschaftlich sinnvolle Anwendung kann bei niedrigeren Konzentrationen von deutlich unter 10ppm vermutet werden. Zudem stören bei der Entfernung durch Ionentauscher eventuell im Ausgangswasser bereits gelöste, respektive durch pH-Anpassungsschritte oder durch die vorhergehende Reduktion gezielt zugeführte Ionen wie Natrium oder, speziell beim Einsatz von Anionenaustauschern zur direkten Entfernung des Chromates, Ionen wie Sulfate oder Chloride die Effizienz und damit die Wirtschaftlichkeit der Verfahren ganz erheblich. Die beschriebene Reinigung des Wasser (ohne vorhergehende Reduktion) mit Ionentauschern wird bei Serpil Edebali, Erol Pehlivan Chemical Engineering Journal 161 (2010) 161-166 diskutiert und wird auch - bei niedrigen Konzentrationen - technisch angewandt.

Die Reinigung von Cr(VI)-haltigem Abwasser ausschließlich mit speziellen, kommerziell nicht verfügbaren Aktivkohlen wurde diskutiert und funktioniert bei niedrigen pH-Werten jedoch langsam und unvollständig, sodass an eine technische Nutzung in Großanlagen nicht zu denken ist (Manuel Peres-Candela, Jose M. Martin-Martinez, Rose Torregrosa-Macia, Wat. REs. Vol 29, No. 9, 1995, 2174-2180).

CN 108 928 953 A offenbart ein Verfahren zum Entfernen von Chrom aus Abwasser umfassend einen pH-Erhöhung Schritt, wobei Chrom als Cr(III) in Form von Hydroxid niederschlägt wird. Ferner wird dort den Zusatz von Aktivkohle zu diesem Niederschlag offenbart.

## Aufgabe der Erfindung:

Es bestand daher Bedarf nach einem Verfahren zur Entfernung von Chromverbindungen aus Cr(VI)-haltigen wässrigen Phasen, welches die Nachteile des oben beschriebenen Stands der Technik vermeidet und über einen weiten Bereich an Cr(VI)-Konzentrationen kosteneffizient und mit moderatem apparativen Aufwand durchgeführt werden kann. Ein ideales Verfahren würde

    i. eine Reinigungsleistung ermöglichen, die es erlaubt, die Chrom(VI)-abgereicherte wässrige Phase einer gewöhnlichen Kläranlage zuzuführen,
    ii. dabei hauptsächlich umweltverträgliche Chemikalien verwenden und
    iii. das abgetrennte Chrom in einer Form bereitstellen, die eine weitere wirtschaftliche Verwertung erlaubt.

Die Aufgabe wird gelöst von einem Verfahren zum Entfernen von Chromverbindungen aus wässrigen Phasen nach Anspruch 1.

Bei den zu entfernenden Chromverbindungen handelt es sich dabei um gelöste oder in kolloidaler Form in der wässrigen Phase vorliegenden Chromionen der Oxidationsstufe VI (Cr(VI)), welche alleine oder zusammen mit ggf. ebenfalls in der wässrigen Phase in gelöster oder kolloidaler Form vorhandenen Chromionen der Oxidationsstufe III (Cr(III)) aus der wässrigen Phase entfernt werden sollen.

Bei der wässrigen Phase handelt es sich typischerweise um Lösungen oder Suspensionen oder Dispersionen mit einem Gehalt an Wasser von mehr als 50 Gew.-%, vorzugsweise mehr als 80 Gew.-% und besonders bevorzugt mehr als 90 Gew.-%. In weiteren bevorzugten Ausführungsformen handelt es sich um Cr(VI) haltiges Grundwasser, Sickerwasser von Halden oder Abwasser, vorzugsweise Abwasser von Galvanikprozessen oder Abwasser von Gerbereien.

## Schritt a)

In die zur Reinigung vorgesehene wässrige Phase wird Aktivkohle, typischerweise in pulvriger oder partikulärer Form eingetragen und verrührt. Die Aktivkohle ist bei pH Werten von 7 nicht in der Lage, größere Mengen Chrom aufzunehmen oder mit Chrom-(VI) zu reagieren. Aus diesem Grund wird in diesem Schritt der pH mit einer geeigneten Säure, z.B. einer Mineralsäure wie Schwefelsäure, oder Salzsäure oder einer organischen Säure, bevorzugt mit Schwefelsäure auf einen Wert von 1,8-3 eingestellt. Die Einstellung des pH kann dabei vor, während und/oder nach Zugabe der Aktivkohle erfolgen, sofern sichergestellt ist, dass am Ende des Schritts a) der pH der wässrigen Phase einen Wert von 1,8 bis 3 aufweist. Bevorzugt erfolgt die Einstellung des pH nach Zugabe der Aktivkohle.

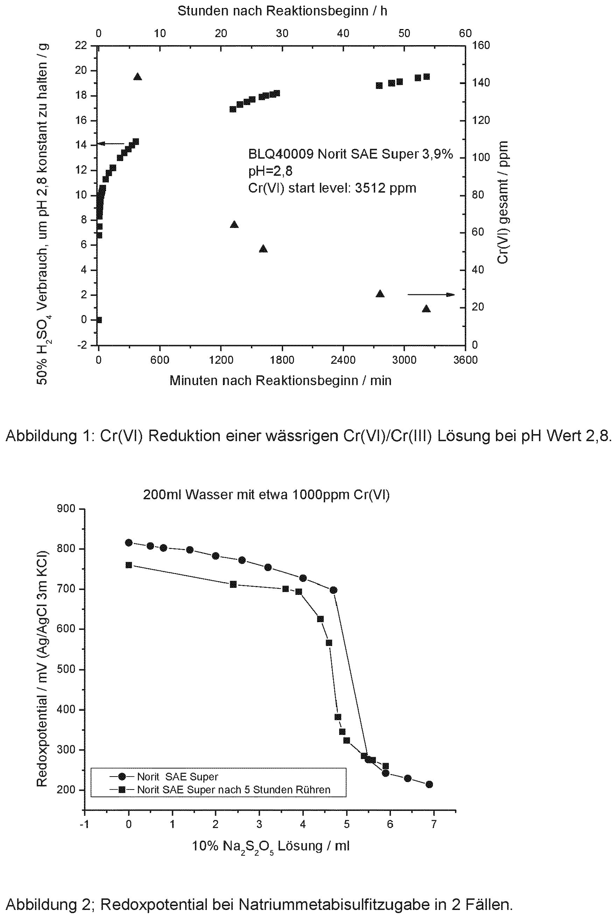

Insbesondere bei einem hohen Gehalt an Cr(VI) kann es vorteilhaft sein, einen Teil des Cr(VI) bereits in Schritt a) zu Cr(III) zu reduzieren, wofür eine Verweilzeit des Gemischs in Schritt a) (gemessen nach erfolgter Zugabe von Aktivkohle und Einstellung des pH auf einen Wert von 1,8-3) von mehr als 5 Minuten, vorzugsweise mehr als 15 Minuten besonders bevorzugt von 0,5 bis 76 Stunden vorteilhaft ist. Während der Verweilzeit ist vorzugsweise eine zumindest temporäre Durchmischung vorgesehen. Die Durchmischung kann z.B. durch Umwälzung, Rühren, Pumpen und/oder Einblasen von Gasen erfolgen. Der pH beginnt mit Fortgang der einsetzenden Reduktion wieder zu steigen und sollte durch Zugabe weiterer Schwefelsäure kompensiert werden. Der Cr(VI) Gehalt sinkt dadurch innerhalb von einigen Stunden signifikant (siehe Abbildung 1). Auch wird ein Teil des Chroms direkt auf der Kohle absorbiert, vermutlich teilweise nach einer Reduktion. Bevorzugt wird in Schritt a) der Gehalt an Cr(VI) in der wässrigen Phase auf unter 1000ppm, vorzugsweise unter 500ppm und besonders bevorzugt unter 100ppm verringert.

Grundsätzlich ist die Reduktion des Cr(VI) bei konstantem pH Wert mit Aktivkohle zwar auch bis auf ca. 1ppm möglich, sofern der pH Wert ständig angepasst wird, jedoch wird durch die hierfür erforderliche Verweildauer das Verfahren weniger effizient. Bei einem Lagerversuch mit pH-Anpassung durch einen stark sauren Ionentauscher in der H-Form wurde erst nach sechs Wochen ein akzeptabler Cr(VI)-Wert erzielt.

Durch die Behandlung mit Aktivkohle kann ein großer Teil des Cr(VI) nach wenigen Stunden reduziert werden. Abbildung 1 zeigt die Cr(VI) Reduktion am Beispiel einer Lösung mit 3512 ppm Cr(VI) als Funktion der Zeit in einer wässrigen Cr(VI)/Cr(III) Lösung bei einem weitgehend konstanten pH Wert von 2,8. Die Menge Schwefelsäure zur Aufrechterhaltung des pH Wertes ist dabei links aufgetragen, der Cr(VI) Wert in der Lösung nach Filtration rechts.

Die Veränderung des Cr(VI)-wertes lässt sich direkt durch die analytische Verfolgung des Cr(VI) beziehungsweise indirekt durch den Verbrauch an Schwefelsäure ermitteln, jedoch nicht durch eine Veränderung des Redoxpotentials mittels entsprechender Elektrode. Das mit einer Redoxpotentialelektrode gemessene Potential ändert sich in diesem Falle unter Beteiligung eines Feststoffes an der Reaktion nur durch die Veränderungen im pH, nicht aber mit der Konzentrationsänderung der Spezies Cr(VI).

Grund hierfür ist, dass das Reduktionsmittel, die Aktivkohle, im Wasser unlöslich ist und daher nicht in das Gleichgewicht eingeht.

Die durch die Verweilzeit in Schritt a) erzielte Reduktion eines Teil des Cr(VI) spart im Schritt b) Reduktionsmittel, ist insgesamt jedoch optional und stellt eine bevorzugte Ausführungsform dar.

Die Aktivkohle im Sinne der Erfindung besteht aus über 80% Kohlenstoff und weist typischerweise eine innere (BET) Oberfläche von mindestens $300m^2/g$ auf. Die Iodzahl sollte über 300mg/g liegen. Typischerweise weist die Aktivkohle in den Cr(III)-niederschlag-Aktivkohle-Gemengen eine Iodzahl von über 300mg/g auf.

Für die Reduktion von Cr(VI) zu Cr(III) besonders bevorzugte Aktivkohlen sind Norit®SAE Super, Norit® GL50W, Bentonorit® CA1 und Norit® Super SA DD, welche von der Cabot Corporation vertrieben werden.

**Schritt b)**

Sofern auf eine Reduktion von Cr(VI) mit Aktivkohle verzichtet wird, oder mittels Aktivkohle ausreichend, aber unvollständig Cr(VI) zu Cr(III) reduziert wurde, wird in einem weiteren Schritt verbliebenes Cr(VI) mit mindestens einem von Aktivkohle verschiedenen Reduktionsmittel zu Cr(III) reduziert. Je weniger Cr(VI) im Schritt a) mit Aktivkohle reduziert wurde, desto mehr von dem zu Aktivkohle verschiedenen Reduktionsmittel wird in Schritt b) benötigt. Somit handelt es sich um eine wirtschaftliche Entscheidung, die abhängig ist von den Kosten der Aktivkohle, des davon verschiedenen Reduktionsmittels, den Kosten für eine eventuell verlängerte Reaktions- und Rührzeit der Lösung in Kesseln und Kosten für Schwefelsäure am entsprechenden Standort.

Als wasserlösliches Reduktionsmittel können eingesetzt werden ein oder mehrere Verbindungen aus der Gruppe enthaltend S(IV)-Verbindungen, wie Sulfite, Bisulfite, Metasulfite und Schwefeldioxid, organische Säuren wie Ameisensäure und Ascorbinsäure, Zucker oder andere Aldehyde, Phosphite, Metalle wie Magnesium und Kalzium, Stickstoffverbindungen wie Hydrazin und weitere, dem Fachmann als Cr(VI) in wässriger Phase reduzierend bekannte Verbindungen.

Bevorzugt finden Sulfite, Bisulfite, Metasulfite und Schwefeldioxid Anwendung insbesondere Natriummetabisulfit $Na_2S_2O_5$, Natriumsulfit, Natriumbisulfit oder Fixiersalz (Natriumthiosulfat) $Na_2S_2O_3$. Ganz besonders bevorzugt wird Natriummetabisulfit eingesetzt.

Bevorzugt wird in Schritt b) die Reduktion durchgeführt, bis der Gehalt an Cr(VI) weniger als 1.0 ppm, vorzugsweise weniger als 500ppb und besonders bevorzugt unter 300ppb beträgt. Eine bevorzugte Ausführungsform ist wie folgt: Wenn während der Verweilzeit in Schritt a) der pH Wert nur noch sehr langsam steigt und damit angenommen werden kann, dass die Reaktion zwischen Aktivkohle und Cr(VI) nahezu vollständig ist, wird - bei einem pH Wert von 1,8 bis 3, vorzugsweise 2,0 - wasserlösliches Reduktionsmittel als Lösung oder Feststoff zugegeben, während das Redoxpotenzial überwacht wird. Das Redoxpotential sollte mit Zugabe drastisch fallen und dann auf einem deutlich niedrigeren Niveau trotz weiterer Zugabe wasserlöslichen Reduktionsmittels konstant bleiben. Diese Reaktion ist vergleichsweise schnell, und nach einigen Minuten bis zu einer Stunde sollte sich das neue Redoxgleichgewicht eingestellt haben. Eventuell muss der pH-Wert nachgeregelt werden. Das gemessene Redoxpotenzial ist auch eine Funktion des pH Wertes, der konstant gehalten werden muss. Typische Verläufe des Reduktionspotenzials als Funktion der Zugabe an wasserlöslichen Reduktionsmittel sind in Abbildung 2 dargestellt, einmal ohne vorherige Reduktion mit Aktivkohle und einmal nach 5h Verweilzeit in Schritt a).

### Schritt c)

Wenn angenommen werden kann, dass die Reduktion des Cr(VI) ausreicht, (Überwachung des Redoxpotentials mit einer Sonde, eventuell zusätzliche Cr(VI)-Bestimmung), wird der pH unter Durchmischung auf einen Wert von 7,0 bis 9,0 erhöht zur Ausfällung des Cr(III).

Der üblicherweise sehr fein ausfallende und sehr schlecht abtrennbare Cr(III)-Niederschlag bildet dabei mit der Aktivkohle ein überraschend leicht abtrennbares Chrom(III)-niederschlag-Aktivkohle-Gemenge.

Der Begriff "Cr(III)-niederschlag-Aktivkohle-Gemenge" soll zum Ausdruck bringen, dass alle im erfindungsgemäßen Verfahren durch Anheben des pH im Schritt c) erhältlichen Niederschläge von Cr(III)-verbindungen auf Aktivkohle damit umfasst sind.

Bevorzugt wird in Schritt c) der pH auf einen Wert von 8,0 bis 9,0 erhöht.

Die Durchmischung in Schritt c) erfolgt beispielsweise mittels Umwälzung, Rühren, Pumpen und/oder Einblasen von Gasen.

### Schritt d)

Die Abtrennung des Cr(III)-niederschlag-Aktivkohle-Gemenges von der flüssigen Phase kann beispielsweise durch Abfiltrieren zum Beispiel in einer Nutsche oder einer Filterpresse, durch Zentrifugieren, Sedimentieren mittels Gravitation oder Filtrieren an Filterkerzen erfolgen. Überraschenderweise führt das erfindungsgemäße Verfahren zu einem Cr(III)-niederschlag-Aktivkohle-Gemenge, welches sich im Vergleich zu einem nicht in Anwesenheit von Aktivkohle basisch gefällten Cr(III)-Niederschlag äußerst leicht abfiltrieren oder sedimentieren lässt. Quasi das gesamte Chrom befindet sich auf der Aktivkohle. Die Filtration kann beispielsweise über einen normalen Papierfilter in kurzer Zeit durchgeführt werden.

Durch den optionalen Einsatzes eine Feinfilters mit unter 1 μm Porenweite lassen sich auch Spuren des Feststoffes abtrennen und dadurch der Chrom-Gesamtgehalt der abgetrennten Lösung weiter reduzieren.

Die in Schritt d) erhaltene wässrige Phase weist typischerweise einen Gesamtchromgehalt von unter 2ppm, bevorzugt unter 1 ppm und besonders bevorzugt unter 0,1 ppm auf. Optional kann das Cr(III)-niederschlag-Aktivkohle-Gemenge getrocknet werden. Je nach Menge der eingesetzten Aktivkohle beträgt der Chromgehalt über 10 Gew.-%, gerechnet als Metall. Die filtrierte wässrige Phase wird auf Chrom gesamt analysiert und kann nach Freigabe in das Abwassernetz geleitet werden.

Von den vier Verfahrensschritten des vorliegenden Verfahrens können die ersten drei in einem einzigen Reaktionsbehälter durchgeführt werden.

Wesentliche Vorteile gegenüber dem Stand der Technik sind, dass die Aktivkohle als alternatives und umweltfreundliches Reduktionsmittel verwendet werden kann, ohne, wie im Stand der Technik diskutiert, das Cr(III) gleichzeitig an die Aktivkohle zu binden und, dass die Aktivkohle den ausfallenden Cr(III)-Niederschlag sofort absorbiert und so in eine filtrierbare Form überführt. Zusätzlich konzentriert die Aktivkohle das Chrom stark auf, was sowohl das Abfallaufkommen wie auch die Entsorgungskosten verringert.

Ein weiterer Vorteil ist, dass das Cr(III)-niederschlag-Aktivkohle-Gemenge einen wertvollen Rohstoff für die Ferrochchrom-Industrie darstellt, da es einerseits über einen hohen Chrom-Anteil verfügt und andererseits mit der Aktivkohle aus einem Reduktionsmittel besteht, das für die Ferrochromherstellung unabdingbar ist.

Die vorliegende Erfindung betrifft daher auch Cr(III)-niederschlag-Aktivkohle-Gemenge nach Anspruch 11. Bevorzugt weisen die Cr(III)-niederschlag-Aktivkohle-Gemenge einen Gehalt an Chrom von 9 bis 30 Gew.-%, gemessen als Cr(0) auf. Die Sedimentationsgeschwindigkeit der Chrom(III)-niederschlag-Aktivkohle-Gemenge liegt üblicherweise im Bereich von 0,05 bis 0,2cm/min.

Weiterhin betrifft die vorliegende Erfindung die Verwendung von Cr(III)-niederschlag-Aktivkohle-Gemengen zur Herstellung von Ferrochrom nach Anspruch 14.

### Beispiele

### Analytik: Bestimmung von Cr gesamt und Cr(VI)

Die Proben werden mit kolorimetrischen Testgeräten und Verfahren gemäß ISO 5398-2 analysiert. Die Messung besteht aus zwei unabhängigen Messungen, d.h. Cr(VI) vor und Cr(VI) nach einem Oxidationsschritt der Probe. Der Oxidationsschritt oxidiert sämtliches Cr-Metall- und Cr(III) in der Probe in Cr(VI) um. Die Differenz zwischen den Cr(VI)-Werten vor und nach dem Oxidationsschritt spiegelt den Gehalt an Cr(0)- und Cr(III) wider.

### Muster

Kontaminiertes und filtriertes Grundwasser (Herkunft: Südafrika) mit Cr gesamt in Höhe von 1022 ppm und 799 ppm Cr(VI) (Farbe gelb bis orange, geringe Trübung) wurde als Ausgangsmaterial in den nachfolgend beschriebenen Versuchen verwendet. Der pH-Wert des filtrierten Grundwassers betrug 8. Die Lösung und Mischungen daraus wurden während der Versuche gerührt. Alle Experimente wurden bei Umgebungstemperatur und -druck durchgeführt.

**Beispiel A:** Reinigung des Grundwassers mit Aktivkohle Typ A und Reduktionsmittel

Zu 200 g Grundwasser wurden 0,5 g Aktivkohle Norit SAE Super in einem Becherglas, das mit einem Rührer, einer pH-Sonde und einer Mettler-Toledo ORP-Sonde (Redoxpotential-Sonde Referenzelektrode Ag/AgCl in 3mol KCl) ausgestattet war, zugegeben und dann durch Zugabe von Schwefelsäure 50% (1,7 g) auf ca. pH 1,8 eingestellt. Anschließend wurde eine Lösung von $Na_2S_2O_5$ 10% in entmineralisiertem Wasser tropfenweise zugegeben, während das ORP (Referenzelektrode Ag/AgCl in 3mol KCl) und der pH-Wert genau überwacht wurden. Der pH-Wert stieg zu Beginn der Dosierung langsam an und wurde dann auf 2 eingestellt und dort durch Zugabe von einigen Tropfen Schwefelsäure 50% gehalten.

Die tropfenweise Zugabe von $Na_2S_2O_5$ 10%ig wurde gestoppt, nachdem das von der Sonde abgegebene Redoxpotential unter 250mV lag und sich durch Zugabe von weiterer Lösung nicht mehr wesentlich veränderte. Der höchste Abfall des Redoxpotential (höchster Wert in der ersten Ableitung) wurde nach 5,1 g festgestellt.

Der pH-Wert wurde dann mit einer 50%igen wässrigen NaOH-Lösung (1,4 g) auf 8,5 eingestellt.

Die Mischung wurde durch ein Filterpapier abfiltriert, und der Gesamt-Cr-Wert und Cr(VI) des Filtrats bestimmt. Das Filtrat war klar und farblos.

Das Filtrat wies 0 ppm Cr(VI) und 2ppm Cr gesamt auf.

**Beispiel B:** Reinigung des Grundwassers mit Aktivkohle Typ B und Reduktionsmittel

Zu 200 g Grundwasser wurden 0,5 g Aktivkohle Organosorb 220-35 in einem mit einem Rührer, einer pH-Sonde und einer Mettler-Toledo ORP-Sonde (Redoxpotential-Sonde) ausgestatteten Becherglas gegeben und anschließend durch Zugabe von 50%iger Schwefelsäure (1,7 g) auf ca. pH 1,8 eingestellt. Dann wurde eine Lösung von $Na_2S_2O_5$ 10%ig in entmineralisiertem Wasser tropfenweise zugegeben, während das Redoxpotential (Referenzelektrode Ag/AgCl in 3mol KCl) und der pH-Wert genau überwacht wurden. Der pH-Wert stieg zu Beginn der Dosierung langsam an, wurde dann auf 2 eingestellt und dort durch Zugabe von einigen Tropfen Schwefelsäure 50%ig gehalten.

Die tropfenweise Zugabe von $Na_2S_2O_5$ 10% wurde gestoppt, nachdem das von der Sonde bestimmte Redoxpotential unter 250mV lag und sich durch Zugabe von weiterer Lösung nicht mehr wesentlich veränderte.

Der pH-Wert wurde dann mit einer 50%igen wässrigen NaOH-Lösung (1,5 g) auf 8,5 eingestellt.

Die Mischung wurde durch ein Filterpapier abfiltriert, und der Gesamt-Cr-Wert und Cr(VI) des Filtrats bestimmt. Das Filtrat war klar und farblos.

Das Filtrat wies 0ppm Cr(VI) und 3ppm Cr gesamt auf.

**Beispiel C:** Reinigung des Grundwassers mit Aktivkohle Typ A, mit längerer Verweilzeit für die Vorreduktion mit Aktivkohle zur Einsparung von Reduktionsmittel im Vergleich zu Beispiel A).

Zu 200 g Grundwasser wurden 0,5 g Aktivkohle Norit SAE Super in einem Becherglas, das mit einem Rührer, einer pH-Sonde und einer Mettler-Toledo ORP-Sonde (Redoxpotential-Sonde) ausgestattet war, zugegeben und dann nacheinander durch Zugabe von Schwefelsäure 50% (1,7 g) auf ca. pH 1,8 eingestellt.

Die Mischung wurde 5 Stunden gerührt.

Dann wurde eine Lösung von $Na_2S_2O_5$ 10%ig in entmineralisiertem Wasser tropfenweise zugegeben, während das ORP (Referenzelektrode Ag/AgCl in 3mol KCl) und der pH-Wert genau überwacht wurden. Der pH-Wert stieg zu Beginn der Dosierung langsam an, wurde dann auf 2 eingestellt und durch Zugabe von einigen Tropfen Schwefelsäure 50%ig gehalten.

Die tropfenweise Zugabe von $Na_2S_2O_5$ 10% wurde gestoppt, nachdem das von der Sonde abgegebene Redoxpotential unter 250mV lag und sich durch Zugabe von weiterer $Na_2S_2O_5$ 10% Lösung nicht mehr wesentlich veränderte. Der höchste Abfall des Redoxpotential (höchster Wert in der ersten Ableitung) wurde nach Zugabe von 4,7 g der Lösung festgestellt.

Der pH-Wert wurde dann mit einer 50%igen wässrigen NaOH-Lösung (1,5 g) auf 8,5 eingestellt.

Die Mischung wurde durch ein Filterpapier abfiltriert, und der Cr(VI) des Filtrats bestimmt. Das Filtrat war klar und farblos.

Das Filtrat wies 0,4ppm Cr(VI) auf.

**Beispiel D:** Reinigung des Grundwassers mit Aktivkohle

Zu 353,2 kg filtriertem Grundwasser (pH= 6,65) mit analytischen Daten wie oben wurden 439,6 g Aktivkohle Norit GL50W zugegeben und suspendiert. Unter Rühren wurden anschließend 1,701 kg Schwefelsäure 50%ig zugegeben. Der pH betrug 2,0, das Redoxpotenzial (Referenzelektrode Ag/AgCl in 3mol KCl) lag bei 605 mV.

6,0 kg $Na_2S_2O_5$ (20%ige Lösung) wurden schrittweise unter Rühren zugegeben, wobei abwechselnd 50%ige Schwefelsäure (1,372 g) zugegeben wurde, um den pH-Wert auf 2 zu halten.

Das Redoxpotential nach vollständiger Zugabe betrug 236 mV, der pH-Wert 2,03. Die Mischung wurde 20 Minuten gerührt.

Dann wurden langsam 2560 g NaOH (50%) zugegeben, der pH-Wert betrug 8,58 nach vollständiger Zugabe.

Nachdem das Rührwerk gestoppt wurde, setzte sich sofort ein schwarzer Niederschlag ab.

Die obere Phase nach dem Absetzen hatte eine Chromsumme von 143 μg/kg. Eine Probe der Flüssigkeit wurde durch einen 200-nm-Spritzenfilter filtriert. Die Flüssigkeit hatte 54 μg/kg Cr insgesamt.

Eine Probe der oberen Phase nach dem Absetzen wurde mit einem Ionenaustauscherharz Lewatit TP107 (LANXESS) gemischt. Nach zwei Stunden Kontaktzeit hatte die Flüssigkeit einen Gesamtchromgehalt von 11 μg/kg.

**Beispiel E:** Abreicherung niedrig konzentrierter Lösungen

Zu 2000g einer Lösung von Cr(VI) (5,11 mg/kg) wurden 53mg Aktivkohle Norit GL50W gegeben und der pH mit Schwefelsäure (50%ig) auf 2,0 eingestellt.

$Na_2S_2O_5$ 10%ige Lösung wurde tropfenweise zugegeben, bis das Redoxpotential (Referenzelektrode Ag/AgCl in 3mol KCl) <250mV betrug. Der pH-Wert wurde durch Zugabe von Schwefelsäure konstant gehalten.

Der pH-Wert wurde mit 50% NaOH auf 8,9 eingestellt, die resultierende schwarze Aufschlämmung durch ein Filterpapier filtriert und das Filtrat auf Cr gesamt analysiert, welcher 1570 μg/l betrug.

Das Filtrat wurde mit einem 0,2μm-Spritzenfilter filtriert und auf Gesamt-Cr analysiert, der 8 μg/l betrug.

Beispiel F: Bestimmung des Filterkuchenwiderstandes

Zu 2000 g Grundwasser wurden in einem 3-Liter Becherglas 5 g Aktivkohle Organosorb 220-35 gegeben. in einem Becherglas, das mit einem Rührer, einer pH-Sonde und einer Mettler-Toledo ORP-Sonde (Redoxpotential-Sonde) ausgestattet war, zugegeben und dann durch Zugabe von Schwefelsäure 50% auf ca. pH 1,8 eingestellt.

Dann wurde eine Lösung von $Na_2S_2O_5$ 10% in entmineralisiertem Wasser tropfenweise zugegeben, während das ORP (Referenzelektrode Ag/AgCl in 3mol KCl) und der pH-Wert durch weitere Zugabe konstant gehalten wurde.

Die tropfenweise Zugabe von $Na_2S_2O_5$ 10% wurde gestoppt, nachdem das von der Sonde abgegebene Redoxpotential unter 240mV lag und sich durch Zugabe von weiterer $Na_2S_2O_5$ 10% Lösung nicht mehr wesentlich veränderte.

Der pH-Wert wurde dann mit einer 50%igen wässrigen NaOH-Lösung auf 8,51 eingestellt. Die Mischung wurde durch ein Filterpapier auf einer Nutsche (Durchmesser 150mm) mit Vakuum abfiltriert.

Der getrocknete Filterkuchen (Höhe: 3mm) wurde analysiert: Cr 18 Gew.-%.

Für ein Volumen von 2,1 Liter wurden 38 Minuten benötigt.

Der Kuchenwiderstand $\alpha_C$ wurde aus folgender Formel näherungsweise ermittelt, wobei ein gleichbleibender Volumenstrom während der Filtration angenommen wurde:

$$\frac{1}{A_F} \cdot \frac{dV_f}{dt} = \frac{\Delta p}{\eta \cdot (\beta_M + \alpha_C \cdot h_k)},$$

worin AF die Filterfläche (0,0176 m²), dV/dt der Volumenstrom (9,21·10-7 m³/s), $\Delta p$ die Druckdifferenz von 1 bar (10⁵ N/m²), η die Viskosität von Wasser (1 N·s/m²), $h_k$ die Kuchenhöhe von 0,003 m und $\beta_M$ der Widerstand des Filtermediums ist, der vernachlässigt wurde.

Daraus ergibt sich ein Kuchenwiderstand von kleiner als 10¹⁵ m⁻².

**Patentansprüche**

1. Verfahren zum Entfernen von Chromverbindungen aus wässrigen Phasen umfassend die Schritte:

   a) Zugabe von Aktivkohle zu einer Cr(VI)-haltigen wässrigen Phase und Einstellung des pH auf einen Wert von 1,8 bis 3,
   b) Reduktion von Cr(VI) mit mindestens einem von Aktivkohle verschiedenen Reduktionsmittel zu Cr(III),
   c) Erhöhung des pH unter Durchmischung auf einen Wert von 7,0 bis 9,0 zur Ausfällung des Cr(III) unter Bildung eines Cr(III)-niederschlag-Aktivkohle-Gemenges
   d) Abtrennung des Cr(III)-niederschlag-Aktivkohle-Gemenges von der flüssigen Phase.

2. Verfahren gemäß Anspruch 1, wobei Schritt a) eine Verweilzeit von mehr als 5 Minuten, vorzugsweise mehr als 15 Minuten besonders bevorzugt von 0,5 bis 76 Stunden aufweist.

3. Verfahren gemäß Anspruch 2, wobei in Schritt a) der Gehalt an Cr(VI) in der wässrigen Phase auf unter 1000ppm, vorzugsweise unter 500ppm und besonders bevorzugt unter 100ppm verringert wird.

4. Verfahren gemäß einem oder mehreren der Ansprüche 1 bis 3, wobei in Schritt b) das von Aktivkohle verschiedene Reduktionsmittel ausgewählt ist aus der Gruppe enthaltend S(IV)-Verbindungen wie Sulfite, Bisulfite, Metasulfite und Schwefeldioxid, organische Säuren wie Ameisensäure und Ascorbinsäure, Zuckeraldehyde, Phosphite, Metalle wie Magnesium und Kalzium, Stickstoffverbindungen wie Hydrazin und Mischungen derselben, bevorzugt aus der Gruppe enthaltend Sulfite, Bisulfite, Metasulfite und Schwefeldioxid.

5. Verfahren gemäß einem oder mehreren der Ansprüche 1 bis 4, wobei in Schritt b) als wasserlösliches Reduktionsmittel Natriummetabisulfit verwendet wird.

6. Verfahren gemäß einem oder mehreren der Ansprüche 1 bis 5, wobei in Schritt b) die Reduktion durchgeführt wird, bis der Gehalt an Cr(VI) weniger als 1,0 ppm, vorzugsweise weniger als 500 ppb und besonders bevorzugt unter 300 ppb beträgt.

7. Verfahren gemäß einem oder mehreren der Ansprüche 1 bis 6, wobei in Schritt c) der pH auf einen Wert von 8,0 bis 9,0 erhöht wird.

8. Verfahren gemäß einem oder mehreren der Ansprüche 1 bis 7, wobei in Schritt c) die Durchmischung mittels Umwälzung, Rühren, Pumpen und/oder Einblasen von Gasen erfolgt.

9. Verfahren gemäß einem oder mehreren der Ansprüche 1 bis 8, wobei die in Schritt d) erhaltene wässrige Phase einen Gesamtchromgehalt von unter 2 ppm aufweist, bevorzugt unter 1 ppm, besonders bevorzugt unter 0,1 ppm.

10. Verfahren gemäß einem oder mehreren der Ansprüche 1 bis 9, wobei es sich bei der wässrigen Phase um Cr(VI)-haltiges Grundwasser, Sickerwasser von Halden, Abwasser, vorzugsweise Abwasser von Galvanikprozessen oder Abwasser von Gerbereien handelt.

11. Cr(III)-niederschlag-Aktivkohle-Gemenge erhältlich nach einem Verfahren gemäß einem oder mehreren der Ansprüche 1 bis 10, welches einen Gehalt an Chrom von 5 bis 50 Gew.-%, vorzugsweise 9 bis 30 Gew.-%, gemessen als Cr(0) aufweist.

12. Cr(III)-niederschlag-Aktivkohle-Gemenge gemäß Anspruch 11, welches eine Sedimentationsgeschwindigkeit von >0,05 cm/min bei Raumtemperatur in Wasser aufweist.

13. Cr(III)-niederschlag-Aktivkohle-Gemenge gemäß einem oder mehreren der Ansprüche 11 und 12, welches einen wie beschrieben in Beispiel F der Beschreibung gemessenen Filterkuchenwiderstand $\alpha_c$ von kleiner als $10^{14}$ m$^{-2}$ besitzt.

14. Verwendung von Cr(III)-niederschlag-Aktivkohle-Gemengen gemäß einem oder mehreren der Ansprüche 11 bis 13 zur Herstellung von Ferrochrom.

**Claims**

1. Process for removing chromium compounds from aqueous phases, comprising the steps of:

a) adding activated carbon to a Cr(VI)-containing aqueous phase and adjusting the pH to a value of 1.8 to 3,
b) reducing Cr(VI) to Cr(III) with at least one reducing agent different from activated carbon,
c) increasing the pH, while mixing, to a value of 7.0 to 9.0 in order to precipitate the Cr(III) to form a Cr(III) precipitate-activated carbon mixture,
d) separating the Cr(III) precipitate-activated carbon mixture from the liquid phase.

2. Process according to Claim 1, wherein step a) has a dwell time of more than 5 minutes, preferably more than 15 mins, particularly preferably of 0.5 to 76 hours.

3. Process according to Claim 2, wherein in step a) the content of Cr(VI) in the aqueous phase is reduced to below 1000 ppm, preferably below 500 ppm and particularly preferably below 100 ppm.

4. Process according to one or more of Claims 1 to 3, wherein in step b) the reducing agent different from activated carbon is selected from the group comprising S(IV) compounds such as sulfites, bisulfites, metasulfites and sulfur dioxide, organic acids such as formic acid and ascorbic acid, sugar aldehydes, phosphites, metals such as magnesium and calcium, nitrogen compounds such as hydrazine and mixtures thereof, preferably from the group comprising sulfites, bisulfites, metasulfites and sulfur dioxide.

5. Process according to one or more of Claims 1 to 4, wherein in step b) the water-soluble reducing agent used is sodium metabisulfite.

6. Process according to one or more of Claims 1 to 5, wherein in step b) the reduction is carried out until the content of Cr(VI) is less than 1.0 ppm, preferably less than 500 ppb and particularly preferably below 300 ppb.

7. Process according to one or more of Claims 1 to 6, wherein in step c) the pH is increased to a value of 8.0 to 9.0.

8. Process according to one or more of Claims 1 to 7, wherein in step c) the mixing is effected by means of circulation, stirring, pumping and/or blowing in gases.

9. Process according to one or more of Claims 1 to 8, wherein the aqueous phase obtained in step d) has a total chromium content of below 2 ppm, preferably below 1 ppm, particularly preferably below 0.1 ppm.

10. Process according to one or more of Claims 1 to 9, wherein the aqueous phase is Cr(VI)-containing groundwater, leachate from waste heaps, wastewa-

**11.** Cr(III) precipitate-activated carbon mixture obtainable by a process according to one or more of Claims 1 to 10 which has a content of chromium of 5% to 50% by weight, preferably 9% to 30% by weight, measured as Cr(0).

**12.** Cr(III) precipitate-activated carbon mixture according to Claim 11 which has a sedimentation rate of >0.05 cm/min at room temperature in water.

**13.** Cr(III) precipitate-activated carbon mixture according to one or more of Claims 11 and 12 which has a filter cake resistance $\alpha_c$, measured as described in Example F of the description, of less than $10^{14}$ m$^{-2}$.

**14.** Use of Cr(III) precipitate-activated carbon mixtures according to one or more of Claims 11 to 13 for producing ferrochrome.

**Revendications**

**1.** Procédé pour l'élimination de composés de chrome à partir de phases aqueuses, comportant les étapes :

a) addition de charbon actif à une phase aqueuse contenant du Cr(VI) et ajustement du pH à une valeur de 1,8 à 3,
b) réduction du Cr(VI) à l'aide d'au moins un réducteur différent du charbon actif, pour obtenir Cr(III),
c) élévation du pH par homogénéisation jusqu'à une valeur de 7,0 à 9,0, pour la précipitation du Cr(III) avec formation d'un mélange charbon actif-précipité de Cr(III),
d) séparation du mélange charbon actif-précipité de Cr(III) d'avec la phase liquide.

**2.** Procédé selon la revendication 1, dans lequel l'étape a) comporte un temps de séjour de plus de 5 minutes, de préférence de plus de 15 minutes, de façon plus particulièrement préférée de 0,5 à 76 heures.

**3.** Procédé selon la revendication 2, dans lequel dans l'étape a) la teneur en Cr(VI) de la phase aqueuse est abaissée au-dessous de 1 000 ppm, de préférence au-dessous de 500 ppm et de façon plus particulièrement préférée au-dessous de 100 ppm.

**4.** Procédé selon une ou plusieurs des revendications 1 à 3, dans lequel dans l'étape b) le réducteur différent du charbon actif est choisi dans le groupe contenant des composés de S(IV), tels que des sulfites, bisulfites, métasulfites et le dioxyde de soufre, des composés organiques tels que l'acide formique et l'acide ascorbique, des aldéhydes dérivés de sucres, des phosphites, des métaux tels que le magnésium et le calcium, des composés azotés tels que l'hydrazine et des mélanges de ceux-ci, de préférence dans le groupe contenant des sulfites, bisulfites, métasulfites et le dioxyde de soufre.

**5.** Procédé selon une ou plusieurs des revendications 1 à 4, dans lequel dans l'étape b) du métabisulfite de sodium est utilisé en tant que réducteur hydrosoluble.

**6.** Procédé selon une ou plusieurs des revendications 1 à 5, dans lequel dans l'étape b) la réduction est effectuée jusqu'à ce que la teneur en Cr(VI) soit inférieure à 1,0 ppm, de préférence inférieure à 500 ppb et de façon plus particulièrement préférée inférieure à 300 ppb.

**7.** Procédé selon une ou plusieurs des revendications 1 à 6, dans lequel dans l'étape c) le pH est élevé jusqu'à une valeur de 8,0 à 9,0.

**8.** Procédé selon une ou plusieurs des revendications 1 à 7, dans lequel dans l'étape c) l'homogénéisation est effectuée par circulation, agitation, pompage et/ou insufflation de gaz.

**9.** Procédé selon une ou plusieurs des revendications 1 à 8, dans lequel la phase aqueuse obtenue dans l'étape d) présente une teneur en chrome total inférieure à 2 ppm, de préférence inférieure à 1 ppm, de façon particulièrement préférée inférieure à 0,1 ppm.

**10.** Procédé selon une ou plusieurs des revendications 1 à 9, dans lequel pour ce qui est de la phase aqueuse il s'agit d'eau souterraine, d'eau d'infiltration de décharges, d'eau résiduaire, de préférence d'eau résiduaire de processus de galvanoplastie, ou d'eau résiduaire de tanneries, contenant du Cr(VI).

**11.** Mélange charbon actif-précipité de Cr(III) pouvant être obtenu conformément à un procédé selon une ou plusieurs des revendications 1 à 10, qui présente une teneur en chrome de 5 à 50 % en poids, de préférence 9 à 30 % en poids, mesurée en tant que Cr(0).

**12.** Mélange charbon actif-précipité de Cr(III) selon la revendication 11, qui présente une vitesse de sédimentation de > 0,05 cm/min dans de l'eau à la température ambiante.

**13.** Mélange charbon actif-précipité de Cr(III) selon une ou plusieurs des revendications 11 et 12, qui présente une résistance du gâteau de filtration $\alpha_c$, telle que mesurée dans l'exemple F de la description, de

moins de $10^{14}$ m$^{-2}$.

14. Utilisation de mélanges charbon actif-précipité de Cr(III) selon une ou plusieurs des revendications 11 à 13, pour la production de ferrochrome.

Abbildung 1: Cr(VI) Reduktion einer wässrigen Cr(VI)/Cr(III) Lösung bei pH Wert 2,8.

Abbildung 2; Redoxpotential bei Natriummetabisulfitzugabe in 2 Fällen.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 108928953 A

**In der Beschreibung aufgeführte Nicht-Patentliteratur**

- **A. ÖZER ; H. S. ALTUNDOGAN ; M. ERDEM ; F. TÜMEN.** *Environmental Pollution,* 1997, vol. 97 (1-2), 107-112
- **G. LEE ; J. PARK.** *Geochimica et Cosmochimica Acta,* 2013, vol. 102, 162-174
- **YAO-TUNG LINA ; CHING-PAO HUANGB.** *Separation and Purification Technology,* 2008, vol. 63, 191-199
- **RUMI CHAND ; KENJI NARIMURA ; HIDETAKA KAWAKITA ; KEISUKE OHTO ; TAKANORI WATARI ; KATSUTOSHI INOUE.** *Journal of Hazardous Materials,* 2009, vol. 163, 245-250
- **N. KONGSRICHAROERN ; C. POLPRASERT.** *Wat.Sci. Tech.,* 1995, vol. 31 (9), 109-117
- **GRACE PAVITHRA ; V. JAIKUMAR ; P. SENTHIL KUMAR ; P. SUNDAR RAJAN.** *Journal of Cleaner Production,* 2019, vol. 228, 580-593
- **V. MADHAVI ; A. VIJAY BHASKAR REDDY ; K. G. REDDY ; G, MADHAVI ; T. NAGA.** Venkata Krishna Vara Prasad Research. *Journal of Recent Sciences,* Januar 2013, vol. 2 (1), 71-83
- Application Data Sheet ADS 3300-02/rev.B. Rosemount Analytical Inc, Mai 2008
- **F. GODE ; E. PEHLIVAN.** *Journal of Hazardous Materials,* 2003, vol. B100, 231-243
- **S. KOCAOBA ; G. AKCIN.** *Adsorption Science & Technology,* 2004, vol. 22 (5
- **S. RENGARAJ ; KYEONG-HO YEON ; SEUNG-HYEON MOON.** *Journal of Hazardous Materials,* 2001, vol. B87, 273-287
- **SERPIL EDEBALI ; EROL PEHLIVAN.** *Chemical Engineering Journal,* 2010, vol. 161, 161-166
- **MANUEL PERES-CANDELA ; JOSE M. MARTIN-MARTINEZ ; ROSE TORREGROSA-MACIA.** *Wat. REs.,* 1995, vol. 29 (9), 2174-2180